# EUROPEAN PATENT SPECIFICATION

(11) **EP 4 454 863 B1**
(45) Date of publication and mention of the grant of the patent: **24.06.2026**
(21) Application number: 24162885.8
(22) Date of filing: 12.03.2024
(51) Int. Cl.: B29C 65/02, B29C 65/82, G01M 3/38, G01N 21/88, B29L 31/00, G01N 21/01, B29C 65/36, B29C 65/10, B29C 65/08, B29K 705/02

(54) **COMPUTER-IMPLEMENTED SYSTEM AND METHOD FOR AUTOMATED DEFECT DETECTION IN SEALINGS OF COMPOSITE PACKAGES**
COMPUTERIMPLEMENTIERTES SYSTEM UND VERFAHREN ZUR AUTOMATISIERTEN FEHLERERKENNUNG IN VERSIEGELUNGEN VON VERBUNDVERPACKUNGEN
SYSTÈME ET PROCÉDÉ MIS EN OEUVRE PAR ORDINATEUR POUR LA DÉTECTION AUTOMATISÉE DE DÉFAUTS DANS DES SCELLEMENTS D'EMBALLAGES COMPOSITES

(30) Priority: 23.03.2023 IT 202300005556
(43) Date of publication of application: 30.10.2024
(73) Proprietor: Tetra Laval Holdings & Finance S.A., 1009 Pully (CH)
(72) Inventor: PICCININI, Giorgio, 41123 MODENA (IT); VERASANI, Mattia, 41123 MODENA (IT); MALTONI, Luca, 41123 MODENA (IT); BARLETTA, Federica, 41123 MODENA (IT); RONCAGLIA, Riccardo, 41123 MODENA (IT); TEDESCO, Elena, 41123 MODENA (IT)
(74) Representative: Tetra Pak Patent Attorneys

(56) References cited:
- WO-A1-2022/063373
- AU-A1- 2020 271 090
- IT-A1- 202100 018 176
- KERR D ET AL: "Quality inspection of food packaging seals using machine vision with texture analysis", vol. 218, no. 11, 1 November 2004 (2004-11-01), GB, pages 1591 - 1599, XP055869894, ISSN: 0954-4054, Retrieved from the Internet <URL:http://journals.sagepub.com/doi/pdf/10.1243/0954405042418527> DOI: 10.1243/0954405042418527

## Description

### TECHNICAL FIELD

The present invention relates to a computer-implemented system and method for automated defect detection in sealings of composite packages, in particular filled with a pourable product, such as a pourable food product.

### BACKGROUND ART

As is known, many liquid or pourable food products, such as fruit juice, UHT (ultra-high-temperature treated) milk, wine, tomato sauce, etc., are packaged in sealed composite packages made of a sterilized multilayer packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g., polyethylene. In the case of aseptic packages for long-storage products, the packaging material also comprises a layer of oxygen-barrier material, e.g., an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, some of which advance a web of packaging material through a sterilization unit of the packaging machine for sterilizing the web of packaging material. Then, the sterilized web of packaging material is maintained and advanced within an isolation chamber and is folded and sealed longitudinally to form a tube, which is further advanced. The tube is filled with a pourable product and is transversally sealed and cut along equally spaced transversal cross sections within a package forming apparatus of the packaging machine during advancement of the tube.

In more detail, the package forming apparatus comprises a plurality of forming and sealing assemblies, each one, in use, shaping and transversally sealing and cutting the tube so as to obtain the single packages.

Each forming and sealing assembly comprises a respective sealing unit for transversally sealing the tube for obtaining a respective transversal seal portion by locally compressing the tube and heating the respective portions of the layers of heat-seal plastic material. The heating may occur, for example, by sealing units generating ultrasonic vibrations.

Each forming and sealing assembly also comprises a cutting device for cutting through the transversal seal portion, thereby separating a sealed composite package from the tube, and forming a first transversal sealing band and a second transversal sealing band. While the respective first sealing band belongs to the just formed sealed composite package, the second sealing band belongs to the sealed composite package that will be formed directly afterwards.

The quality of the sealings, in particular of the transversal sealing bands, plays a relevant role in the overall quality of the packages, due to the fact that any damages in the packaging material or errors in the sealing can result in a breach of the protective environment. Therefore, it is important to monitor the quality of the sealings during the packaging process performed in the packaging machines.

Currently, in order to execute test measurements for sealing quality evaluation, sample composite packages are taken from the plurality of formed composite packages and analyzed, at defined time intervals.

In particular, one or more samples having a respective transversal sealing band are prepared from each of the sampled composite packages.

After preparation of each sample, a technical operator uses a stretch plier or other suitable instrument designed to tear apart the respective sealing band to expose the sealing pattern. Then, the technical operator observes the exposed sealing and looks for any defects, such as the presence of channels (i.e., leaks), burn marks, or plastic lumps.

The testing results depend on, and are heavily influenced by, the experience of the technical operators performing the tests. Moreover, the same tests are time consuming and have to be performed on a limited number of samples. Even though the known solutions for controlling the quality of the sealings generally provide for satisfactory results, a desire is felt in the field to further improve the means for controlling the quality and assessing the presence of defects of the sealings in composite packages. Documents AU2020271090 A1, WO 2022/063373 A1, IT202100018176 A1 and KERR D ET AL: "Quality inspection of food packaging seals using machine vision with texture analysis", INSTITUTION OF MECHANICAL ENGINEERS may be of interest for the present description.

### DISCLOSURE OF THE INVENTION

It is therefore an object of the present invention to provide a solution allowing for a reliable and repeatable automated defect detection in sealings of composite packages.

According to the present invention, a system and method and computer program product are provided, as defined in the appended claims.

### BRIEF DESCRIPTION OF THE DRAWINGS

A non-limiting embodiment of the present invention will be described by way of example with reference to the accompanying drawings, in which:
Figure 1 is a schematic representation of an automated defect detection system according to an embodiment of the present solution.
Figure 2 is a schematic top view of a sealing band to be inspected by the system of Figure 1;
Figures 3 and 4 are processed images of the sealing band at the end of a delamination process, showing possible defects;
Figure 5 is a schematic block diagram of an analysis unit of the system of Figure 1;
Figure 6 is an exemplary output result from the analysis unit, showing an image of the sealing band with detected defects and an associated confidence score;
Figure 7 is a perspective top-side view of an automated testing apparatus of the system, according to an aspect of the present solution, with parts removed for clarity;
Figures 8A, 8B and 8C are schematic views of the sealing band at different times during a delamination procedure;
and Figure 9 is a force curve measured during the execution of the delamination procedure.

### BEST MODES FOR CARRYING OUT THE INVENTION

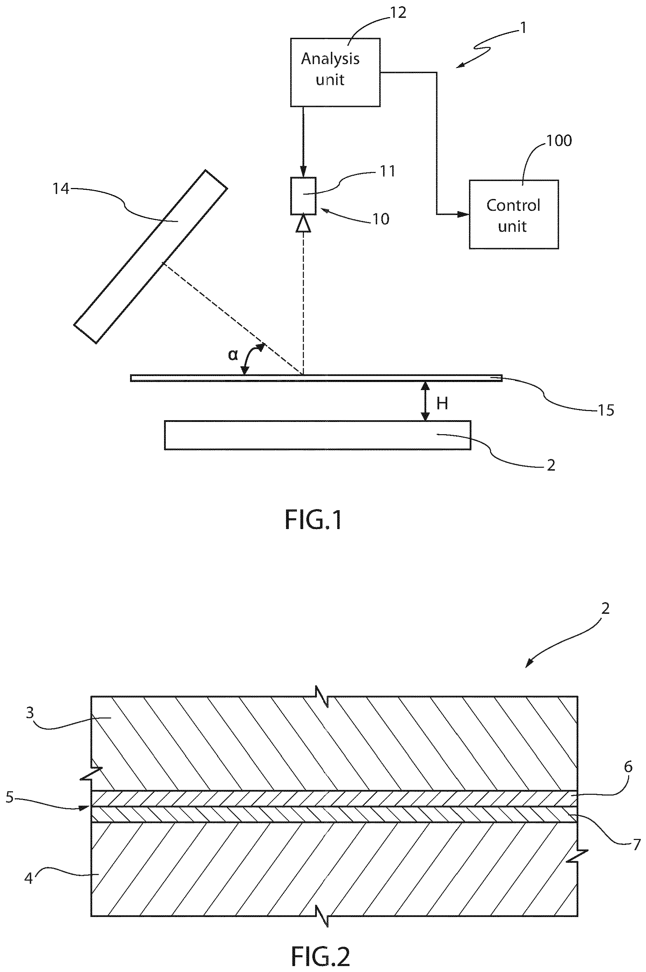

Figure 1 shows schematically an automated defect detection system, denoted as a whole with 1, for determining the quality of a sealing, in particular of a sealing band 2, for example a transversal sealing band, of a composite package (here not shown) filled with a pourable product, in particular a pourable food product, such as (pasteurized) milk, fruit juice, wine, tomato sauce, salt, sugar or the like.

The composite package may be formed from a multilayer packaging material. The multilayer packaging material may comprise at least one layer of fibrous material, such as e.g., a paper or cardboard, and at least two layers of heat-seal plastic material, e.g., polyethylene, interposing the layer of fibrous material in between one another. One of these two layers of heat-seal plastic material defines the inner face of the composite package contacting the pourable product.

The packaging material may also comprise a layer of gas- and light-barrier material, e.g., aluminum foil or ethylene vinyl alcohol (EVOH) film, in particular being arranged between one of the layers of the heat-seal plastic material and the layer of fibrous material. Preferentially, the packaging material may also comprise a further layer of heat-seal plastic material interposed between the layer of gas- and light-barrier material and the layer of fibrous material.

The sealed composite package may comprise at least one longitudinal sealing band and one, in particular two, transversal sealing bands.

According to some possible non-limiting embodiments, the sealed composite package may be obtained from a single blank, which is formed into a sleeve having the longitudinal sealing band. Subsequently, the sleeve is formed into the sealed composite package, requiring the formation of at least one, in particular two, transversal sealing bands.

According to an alternative non-limiting embodiment, the multilayer packaging material may be provided in the form of a web. In particular, the web may comprise a plurality of repeated patterns, each pattern defining a respective blank for the formation of one respective sealed composite package. According to such an embodiment, the web is formed into a tube, longitudinally sealed, filled with the pourable product, and transversally sealed and cut along equally spaced cross-sections thereby forming respective sealing bands.

According to some possible non-limiting embodiments, the sealed composite package comprises a longitudinal sealing band and a pair of respective transversal sealing bands, in particular arranged at opposite sides of the sealed composite package. In particular, one transversal sealing band may define a transversal top sealing band and the other transversal sealing band may define a transversal bottom sealing band.

As schematically shown in Figure 2, each sealing band 2 (in particular, transversal sealing band) may be formed from a first band portion 3, a second band portion 4 and a layer of heat seal material 5 interposed between the first band portion 3 and the second band portion 4.

Each sealing band 2 may result from an overlap of two portions of the multilayer packaging material and the respective sealing of the two overlapping portions.

Each first band portion 3 and each second band portion 4 may comprise a respective layer of fibrous material.

The layer of heat-seal material 5 may result from the sealing of the two overlapping portions to one another and the fusion of the respective layers of heat-seal plastic material. In particular, the layer of heat-seal material 5 may be formed from at least a first portion of heat-seal material 6 and a second portion of heat-seal material 7.

Returning to Figure 1, the automated defect detection system 1 comprises a vision system 10, having an imaging device 11, e.g. a camera, configured to capture images of the sealing band 2 (for example being arranged above the sealing band 2, at a certain distance therefrom); and an analysis unit 12, operatively coupled to the vision system 10 and configured to analyze one or more images acquired by the imaging device 11 to determine the quality (and assess possible defects) of the sealing band 2. In particular, the analysis unit 12 may be configured to receive and to at least temporarily store these images.

The analysis unit 12 may be implemented by any digital processing unit, such as a microprocessor, a microcontroller, a PLC - Programmable Logic Controller or any suitable processing and computing unit, configured to execute a computer program comprised of a number of software instructions.

According to a possible embodiment, as will be discussed in more details in the following, the imaging device 11 of the vision system 10 may be configured to capture a series of images representative of the time-evolution of a delamination of the sealing band 2 during a tearing test, in particular of a temporal change of the shape of the layer of heat-seal material 5.

The tearing test may be performed by an automated testing apparatus (that will be described in more details in the following), having a first clamping device and a second clamping device configured to clamp the first band portion 3 and, respectively, the second band portion 4 and an actuation device configured to cause a relative movement between the first and second clamping devices so as to determine delamination of the sealing band 2.

The term delamination is here to be intended as the controlled separation of portions of the sealing band 2 from one another, in the specific case, the delamination occurring between first band portion 3 and second band portion 4.

The analysis unit 12 may be configured to analyze one or more images taken during the delamination of the sealing band 2 so as to determine the quality of the same sealing band 2, in particular to detect the presence of defects that may affect the quality of the sealing, e.g., impair sterility of the composite package, such as channels, burn marks, plastic lumps.

In particular, as will be discussed in detail in the following, the analysis unit 12 may be configured to analyze the images by means of artificial intelligence algorithms.

The same analysis unit 12 may be coupled to a control unit 100 of a packaging machine (here not shown), configured to produce the sealed composite packages, in order to adjust the production, in particular the formation of the sealings, based on the results of the performed analysis.

As shown in Figure 1, the automated defect detection system 1 may further comprise an illumination device 14, configured to illuminate the sealing band 2 to be inspected (with a polarized or not polarized light).

In Figure 1 only one illumination device 14 is illustrated; however, preferably, a pair of illumination devices 14 may be provided, on opposite sides of the imaging device 11; such a configuration may allow a better quality of the images acquired by the imaging device.

In a possible embodiment, the automated defect detection system 1 may further comprise a polarization filter 15, which may be interposed between the imaging device 11 of the vision system 10 and the sealing band 2 (placed at a distance H from the same sealing band 2). In the example shown, the light is directed on the polarization filter 15 with an incidence angle α being less than 90 degrees, preferably less than 60 degrees or 45 degrees and reflected on the imaging device 11.

In a different embodiment, the light may go through the sample to be inspected (with the corresponding sealing band) and then received by the imaging device 11.

In yet another embodiment, the polarization filter 15 may be integrated in the optics of the imaging device 11 (in this case, no further polarization filter is required, external to the same imaging device 11).

In this regard, the Applicant has realized that an integrated sensor technology, known as Polarsens, can be advantageously implemented in the imaging device 11, in order to enhance the image quality and thereby improving sealing inspection and characterization by the analysis unit 12.

Polarsens is a CMOS image sensor technology that provides several different angle polarizers formed on a chip (in particular under an on-chip lens layer) during the semiconductor manufacturing process, allowing highly accurate pixel alignments. Using this technique, a single camera device provided with the polarized CMOS sensor is able to acquire with a single shot four different polarized images, thus allowing to increase the information acquired about a sample.

The four images can be then combined using suitable software recombination algorithms; combining the four images leads to further digital data content, that may facilitate the analysis and improve the results.

The Applicant has shown that the use of this technology for quality control applications, in particular applied to sealing inspection, both for tearing tests and also for plastic bag analysis, allows to improve the results of the analysis.

In particular, tests performed by the Applicant have shown that the use of particular recombination algorithms allow to improve the detection of defects and also the analysis of stress and material property (all information that may be used to characterize the quality of the sealing process). These recombination algorithms are: Degree of Linear Polarization; Angle of Linear Polarization; and Glare Reduction.

In particular, in case the Glare Reduction algorithm is used, the different gloss of the material highlights areas with different sealing characteristics, in particular zones that have a sealed inner layer; on the contrary, zones having a not-uniform gloss/reflection may be indicative of a sealing defect.

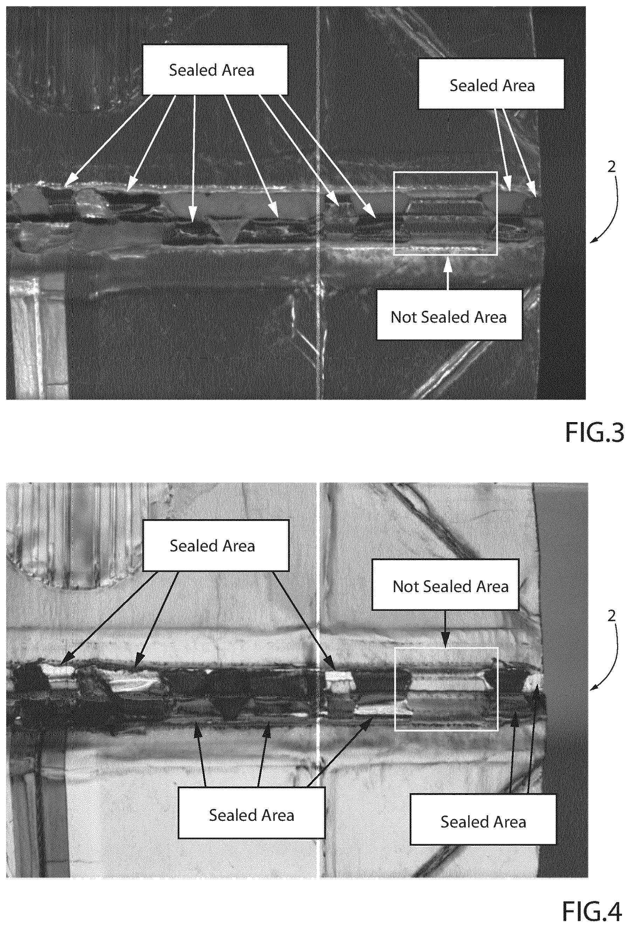

In this respect Figure 3 shows an image collected with a camera provided with integrated Polarsens technology and processed with a Glare Reduction algorithm, regarding a sealing band 2 having a defect, in particular a not-sealed area (the image is in this case taken at the end of a tearing test, with the sealing band 2 having been subjected to a delamination process).

Figure 4 shows an image of the same sealing band 2, this time processed with a Degree of Linear Polarization algorithm; also in this case, it is possible to identify the defect (not-sealed area), which is highlighted through an evidently different reflection pattern.

The Polarsens technology combined with the use of suitable image processing algorithms (that may be implemented in the analysis unit 12) can therefore improve the characterization of the sealings (both in case of tearing tests and plastic bag inspections), empowering the efficiency of the machine learning algorithm for automated defect detection and classification.

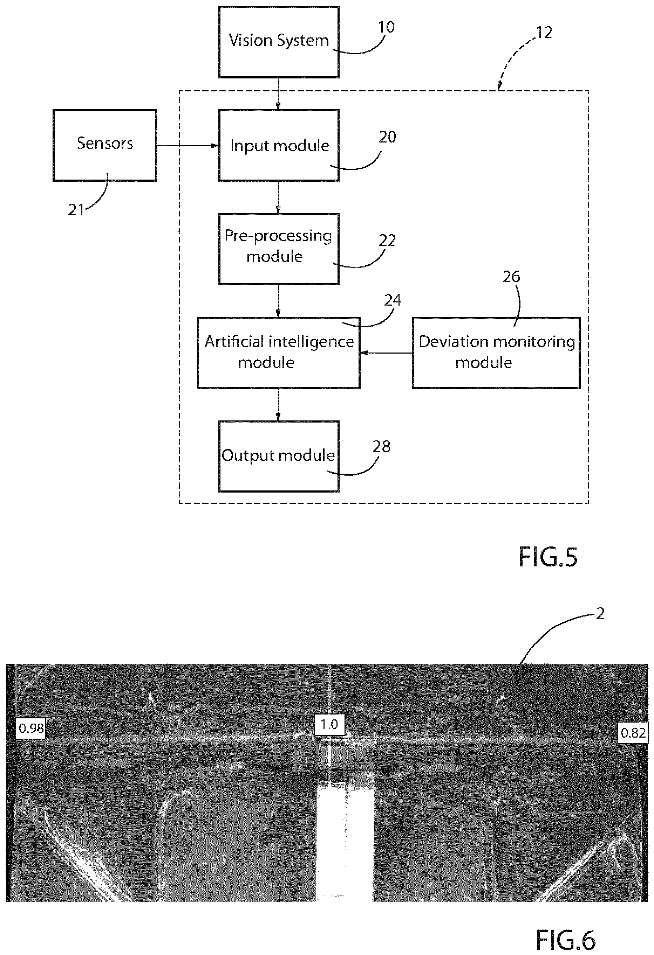

Referring now to Figure 5, a possible embodiment of the analysis unit 12 of the automated defect detection system 1 is discussed in more details.

The analysis unit 12 comprises an input module 20, which is configured to receive image data associated with the images acquired by means of the vision system 10 of the same automated defect detection system 1.

According to a preferred embodiment, input module 20 may also be configured to receive sensor data from a number of sensors 21, which may in this case also be part of the automated defect detection system 1.

Sensors 21 may be configured to provide any sensor data related and relevant to inspection of the sealing band 2, in particular related to the sealing testing procedure and/or the operation of the packaging machine in the formation of the sealing band 2.

For example, during production of the packaging machine, sensor data acquired by the sensors 21 may be related to one or more of: the forming and sealing devices; the level, pressure and/or flow of product; the parameters and settings of the machine.

Moreover, in case a tearing test for the inspection of the sealing quality is performed by an automated testing apparatus (as discussed above), sensor data may be related to tearing forces exerted by the automated testing apparatus and sensors may include force sensors (such as force cells and/or an encoder connected to the actuation device of the testing apparatus).

Sensor data may in this case include force profiles, such as time-dependent force curves and/or position-dependent force curves, in particular the position being indicative of a relative distance between first clamping device and second clamping device, relating to the forces acting on sealing band 2 during its delamination and/or the forces exerted by actuation device on the sealing band 2 while the same actuation device moves, in use, the first and second clamping devices apart from one another.

The above sensor data may include stress/strain displacement profiles of the materials of the sealing band 2. Moreover, the difference in the forces exerted by the first and second clamping devices of the automated testing apparatus may also be included in the same sensor data.

The above sensor data may be provided in an automated manner to the analysis unit 12 by the same automated testing apparatus.

The sensors may also be associated with the packaging machine and the sensor data may include processing data regarding the operation of the same packaging machine, for example of the sealing devices performing sealings of the composite packages.

In particular, the input module 20 may be configured to associate timings of detection of the images by the vision system 10 with the sensor data, e.g., with the force profiles (thereby determining a correlation, in particular a time correlation, between the image data and the sensor data).

The analysis unit 12 further comprises a pre-processing module 22, which is coupled to the input module 20 and is configured to perform pre-processing of the data (image data and, in the preferred embodiment, sensor data) received from the same input module 20.

In particular, the pre-processing module 22 may perform one or more pre-processing steps on the image data, such as, but not limited to, filtering (to discard superfluous data), reshaping, normalization, re-coloring and/or cropping of the same image data (the image being broken down into significant regions). Pre-processing of the sensor data may include operations such as normalization, amplification and filtering.

As discussed above, pre-processing of the image data may include performing suitable recombination algorithms on the images acquired by the imaging device 11 (in this case being provided with an integrated polarization filter).

The analysis unit 12 further comprises an artificial intelligence (AI) module 24, which is coupled to the pre-processing module 22 and is configured to receive the pre-processed input data.

The artificial intelligence module 24 is configured to analyze the pre-processed input data by means of a machine-learning model, e.g., based on neural networks, in order to determine, in an automated manner, the quality of the sealing band 2, in particular so as to detect the presence of defects, such as channels (i.e., leaking sealings), burn marks, plastic lumps, and others.

According to a possible embodiment, the artificial intelligence module 24 is configured to process, jointly or in association, both image data and sensor data, in order to assess the quality of the sealing band 2, with a multi-modal approach (i.e., based on data of different nature). The sensor data may comprise data in addition to the image data, i.e. in addition to the images of the sealing bands.

The machine learning model may be a neural network. The machine learning model may be a deep learning model. The deep learning model should be understood to be a model based on deep learning. Deep learning should be understood to be machine learning in which hypotheses take the form of complex algebraic circuits with tunable connection strengths. The word "deep" refers to the fact that the circuits are typically organized into many layers, which means that computation paths from inputs to outputs have several layers.

The machine learning model may be implemented as a neural network such as a convolutional neural network (CNN), performing deep learning analysis for object detection for labelled defects. The machine learning model may be trained to output a quality measurement based on the input data. The machine learning model may be trained using supervised leaning. In other words, the machine learning model may be trained based on training input data, e.g. image data associated with a quality measurement or sensor data as well as image data associated with a quality measurement. In particular, the quality measurement may be indicative of a presence or absence of one or more defects within the input data (in particular, the image data); optionally the quality measurement may be indicative of a type of defect.

The quality measurement may be a range of continuous values such as a range between 0 and 1; alternatively, the quality measurement may be a discrete set of values.

In terms of any deficiencies or defects in the sealing band 2, the value of the quality measurement may be indicative of a severity of the detected deficiency or defect. Alternatively, the quality measurement may be a binary value, such as either "OK" or "not-OK".

The quality measurement may further comprise information indicative of what type of deficiency or defect the sealing band 2 has (if any). The information indicative of a type of deficiency may for instance be that the sealing is formed incorrectly, or that the packaging material is damaged, both of which may lead to an unsterile package.

The quality measurement may further indicate a confidence score of the output result from the machine learning model, i.e. how confident the machine learning model is that a detected deficiency or defect actually is a deficiency or defect.

In more details, the artificial intelligence module 24 is configured to interpret and aggregate the input data (even of a different nature, as in the case of image and sensor data), generating an output result related to quality control, according to certain parameters of confidence, location and type of defect (defect class).

In particular, all sealing defects or deficiencies possibly occurring in the sealings of the composite packages may be represented in the output results.

Each defect may be characterized through the last layers of the neural network with a bounding box with corresponding spatial information (defect location), a score and classified as a specific defect among the various cases present in the field. The best threshold to maximize the accuracy of the algorithm is sought on the score that indicates the confidence in the prediction of the defect.

According to a possible embodiment, the supervised neural network is trained with a training dataset with exemplary data generated directly on the packaging machine, annotated and labeled with the help of expert operators, in particular in terms of variations, defects, warnings, objects of interest, suspicious areas.

As discussed above, according to a possible embodiment, the supervised neural network is developed to process both image data, in the vision domain, and sensor (or process) data, such as for example stress/strain displacement curves, with a multi-domain architecture that is able to combine the results of two AI architectures operating on different data domains.

Accordingly, the training data set may comprise both the image data and sensor data, both data being independently labelled based on the possible defects or anomalies.

As shown in the same Figure 5, the automated defect detection system 1 may further comprise a deviation monitoring module 26, coupled to the artificial intelligence module 24 and configured to monitor potential deviations of the output results from the same artificial intelligence module 24.

In particular, the deviation monitoring module 26 is configured to evaluate a deviation of a performance of the machine learning model over time and to determine a requirement of re-training of the machine learning model in case the deviation exceeds a given threshold.

The deviation monitoring module 26 may be configured to evaluate (with suitable performance metrics, i.e., measures of how well the machine learning model performs on the input data) an actual performance of the machine learning model as compared to a previous performance (in a previous time interval, e.g. one hour before a current time).

For example, the deviation monitoring module 26 may determine a shift in the confidence or accuracy of the output results (e.g. a deviation in the output score from a range of 98%-99% to a significantly different range of 90%-91%).

In addition, or as an alternative, the deviation monitoring module 26 may be configured to evaluate deviations in performance with respect to the output results associated with the training data set (e.g., the deviations being associated with a quality measurement that drastically increases or decreases over time).

The deviation monitoring module 26 may be configured to determine possible deviations in the nature and characteristics of the input data, e.g. as compared to a previous batch of input data (received in a previous time interval with respect to the current batch of input data) and/or as compared to the training data set.

For example, a shift in the distribution of certain features (e.g. colours) of the image data can be evaluated by the deviation monitoring module 26.

Possible reasons for significant deviations may be for example a change in the materials used in the production of the sealed composite packages or a change in the possible defects or deficiencies occurring in the inspected sealing bands 2 (with new types of deficiencies, which the machine learning model had not seen during training).

It is underlined again that any suitable metric or statistic methodology can be implemented to assess the above deviations.

In case the deviation monitoring module 26 determines the presence of significant deviations in either one (or both) of the output results and input data (i.e., the deviations exceeding a certain threshold), a requirement of re-training of the machine learning model may be determined.

The machine learning model may then undergo a re-training using different training data, until the same machine learning model reaches a certain performance level (e.g. a certain level of accuracy, such as higher than 95%) and can again be employed for testing the quality of the sealings resulting from the production process.

As shown in the above Figure 5, the automated defect detection system 1 may further comprise an output module 28, which is configured to output the results of the analysis performed by the artificial intelligence module 24, in order to provide a feedback on the quality of the sealings.

According to a possible embodiment, the output module 28 may be configured to cooperate with a human-machine interface in order to display the results of the assessment performed by the artificial intelligence module 24 to a human operator.

For example, Figure 6 shows a possible output provided from the output module 28, in particular represented by an image of the inspected sealing band 2, with highlighted zones where defects have been detected by the machine learning model, with a corresponding level of accuracy.

The same output module 28 may be operatively coupled to the control unit 100 of the packaging machine (or directly to a sealing device of the same packaging machine) and configured to provide feedback data for a direct control on the operation of the same packaging machine and/or sealing device, in particular as a function of the determined quality of the inspected sealing bands 2.

In particular, values of parameters and/or settings to be used in the sealing procedure performed by the sealing device may be suggested to the operator or directly fed to the control unit 100 of the packaging machine, by the output module 28, as a function of the assessed quality of the sealings.

For example, the above parameters or settings may include a heating temperature or the value of an electrical current used in the formation of the sealing band 2 by the sealing device of the packaging machine.

The same output module 28 may be further configured to generate alarms or warnings, or even to directly or indirectly cause the stop of the packaging machine (in case of severe deficiencies), based on the assessed quality of the sealings.

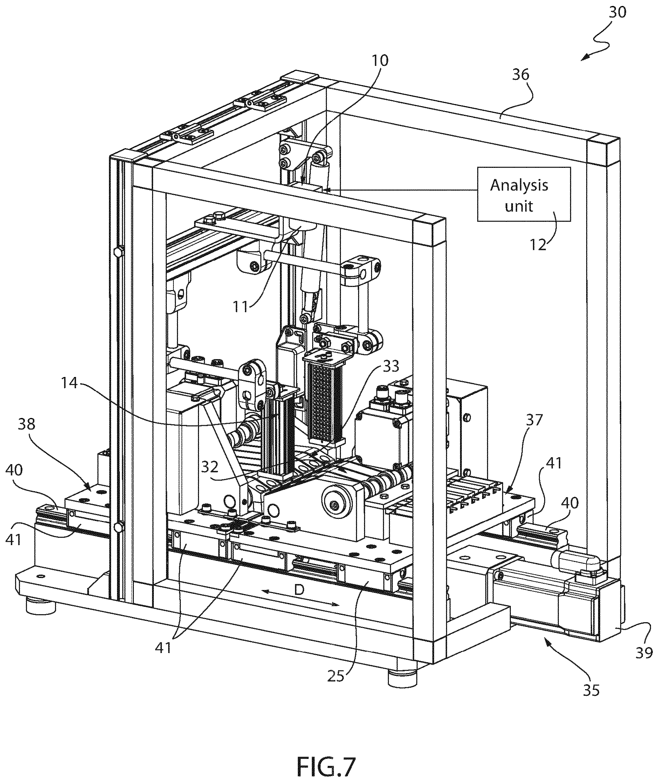

With reference to Figure 7, an automated testing apparatus, denoted with 30, operable for assessing the quality of the sealing bands 2, is now described in more details.

In particular, as schematically represented in the same Figure 7, the automated defect detection system 1 may form an integral part of this automated testing apparatus 30.

Alternatively, the same automated defect detection system 1 may be external and communicatively connected to the automated testing apparatus 30.

As shown in Figure 7, the automated testing apparatus 30 comprises:
- a first clamping device 32 and a second clamping device 33 configured to clamp a sample containing the sealing band 2 to be inspected (here not shown), between one another, so that the same sealing band 2 is interposed between the first clamping device 32 and the second clamping device 33; and
- an actuation device 35 configured to cause a relative movement between the first clamping device 32 and the second clamping device 33, so as to determine delamination of the same sealing band 2.

In particular, actuation device 35 is configured to modify the relative position of first clamping device 32 and second clamping device 33 in a direction D transversal, in particular (substantially) perpendicular, to sealing band 2. In other words, actuation device 35 is configured to exert a force on the sealing band 2 transversally, in particular perpendicularly, to the sealing band 2.

The actuation device 35 is thereby configured to cause the delamination so as to tear first band portion 3 and second band portion 4 apart from one another. In particular, this allows to obtain insights into the layer of heat-seal material 5, so as to allow inspection of the quality of the sealing.

Actuation device 35 allows to repeat measurements on various samples under controlled and defined conditions; in particular, actuation device 35 may be configured to apply a defined force profile (force per time) and/or movement profile (velocity per time) onto various sealing bands 2. Such defined force profiles and/or movement profiles can be repeatedly applied.

In more details, actuation device 35 may comprise
- a first carriage 37 carrying first clamping device 32;
- a second carriage 38 carrying second clamping device 33; and
- an actuator 39, in particular an electric motor, operatively coupled to first carriage 37 and/or second carriage 38 and configured to control the relative position of first carriage 37 and second carriage 38 for controlling the relative position of first clamping device 32 and second clamping device 33.

Actuation device 35 may also comprise one or more tracks 40, in particular having a rectilinear shape, configured to guide movement of first carriage 37 and second carriage 38.

In particular, first carriage 37 and second carriage 38 comprise respective sliding elements 41 moveably coupling respectively first carriage 37 and second carriage 38 onto one or more corresponding tracks 40.

In the embodiment represented in Figure 7, the imaging device 11 of the vision system 10 of the automated defect detection system 1 is coupled to a housing 36 of the testing apparatus 30, so as to capture images of the sealing band 2 during the delamination, preferably a series of images representative of the time-evolution of the delamination of sealing band 2, in particular of a temporal change of the shape of the layer of heat-seal material 5.

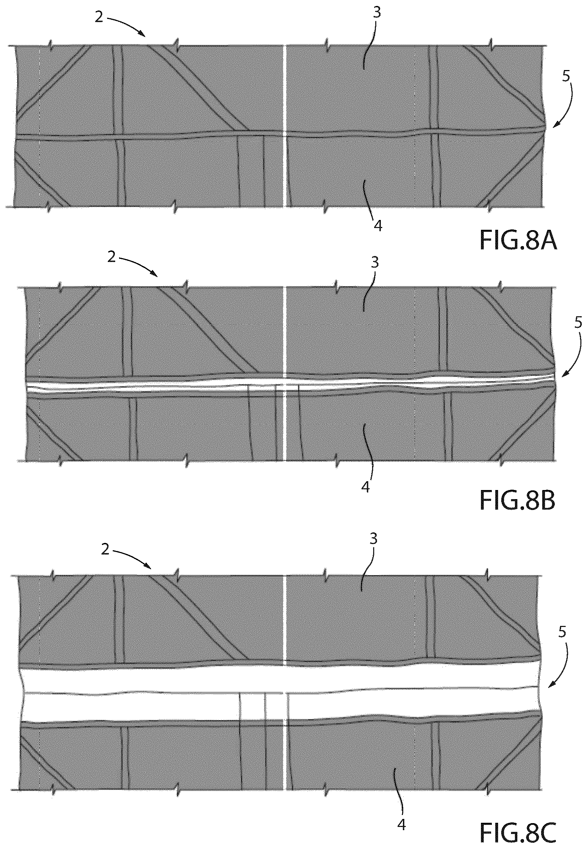

In this regard, Figures 8A, 8B and 8C schematically show exemplary shapes of the sample, with the corresponding sealing band 2, at different times of the delamination process.

The housing 36 of the testing apparatus 30 also carries the illumination device 14, e.g., a LED bar illuminator, configured to illuminate the sealing band 2. As shown in Figure 7, preferably, a pair of illumination devices 14 are provided, on opposite sides of the imaging device 11.

The analysis unit 12 of the automated defect detection system 1 is in this embodiment also arranged within the housing 36. In a manner not shown, the analysis unit 12 may be operatively coupled to a control unit of the automated testing apparatus 30, which controls general operation thereof.

The automated testing apparatus 30 also comprises a detection device configured to determine at least one force acting on the sealing band 2 during its delamination and/or a relative position between the first clamping device 32 and the second clamping device 33; the analysis unit 12 may be further configured to receive, as input data, the at least one force and/or position and the artificial intelligence module 24 may be configured to process with the machine-learning model both image data and the at least one force and/or position.

In particular, a force detection device (here not shown) may be configured to sense the tearing forces exerted on the sealing band 2 during its delamination and/or the forces exerted by actuation device 35 while moving the first clamping device 32 and second clamping device 33 apart from one another.

The force detection device may comprise one or more force cells and/or an encoder connected to the actuator 39.

In this embodiment, the detection device is therefore part of the sensors 21, which, as previously discussed, are part of the automated defect detection system 1.

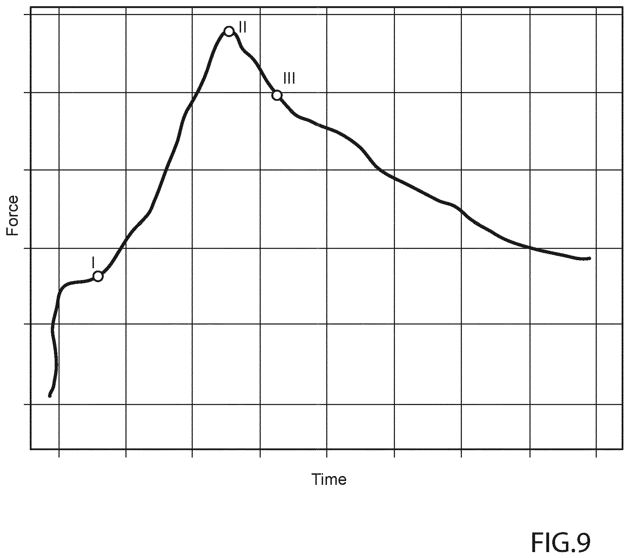

For example, the force detection device can determine a force curve as the one shown in Figure 9. Points I, II and III of the force curves indicate moments at which vision system 10 takes images of the sealing band 2, which at the specific times of the imaging may have respective exemplary shapes as shown in Figures 8A, 8B and 8C.

According to some preferred non-limiting embodiments, the automated defect detection system 1 (and testing apparatus 30) may be part of a packaging plant, the packaging plant being configured to form sealed composite packages filled with the pourable product.

In particular, the automated defect detection system 1 (and testing apparatus 30) may be configured to determine the quality of one or more sealing bands 2 of sampled composite packages, removed from the overall production, in particular at predetermined time intervals and/or at specific events.

The packaging plant may comprise:
- a packaging apparatus for forming a plurality of sealed composite packages having one or more sealing bands 2, in particular two transversal sealing bands and/or one longitudinal sealing band, and being filled with the pourable product; and
- a sampling unit for sampling one or more sealed composite packages from the plurality of sealed composite packages.

In particular, the packaging apparatus produces a plurality of composite packages advancing along an advancement path and the sampling unit is arranged downstream of the packaging apparatus along the advancement path.

Automated testing apparatus 30 may be used for determining the quality of one or more sealing bands 2 of the one or more sealed composite packages sampled by the sampling unit. In particular, one or more samples are prepared from the one or more sampled composite packages.

In more detail, the packaging apparatus may be configured to produce the sealed composite packages from the multilayer packaging material, in particular being provided in the form of a web.

Furthermore, the packaging plant, in particular the packaging apparatus, may comprise a control unit (the above referenced control unit 100), configured to control operation of the packaging apparatus.

Moreover, the packaging apparatus may comprise a transversal sealing device for generating transversal sealing bands of the sealed composite packages. In particular, the control unit is operatively connected to the transversal sealing device and configured to control operation of the transversal sealing device, in particular in dependence of the quality determined by means of the automated defect detection system 1 of the one or more sealing bands 2 of the one or more sampled sealed composite packages.

In further detail, the packaging apparatus may comprise:
- a conveying device for advancing (in a known manner) the web along a web advancement path to a forming station, at which, in use, the web is formed into a tube;
- an isolation chamber having an inner environment, in particular an inner sterile environment containing a sterile gas, and being separated from an (hostile) outer environment;
- a tube forming and sealing device configured to form the tube from the, in use, advancing web within the inner environment and to longitudinally seal the tube within the inner environment;
- a filling device for filling the tube with the pourable product; and
- a package forming apparatus configured to form, to transversally seal and to transversally cut the, in use, advancing tube for forming the composite packages.

In particular, the package forming apparatus may comprise the transversal sealing device.

Moreover, the packaging apparatus may also comprise a sterilizing unit configured to sterilize the, in use, advancing web at a sterilization station, in particular the sterilization station being arranged upstream of the forming station along the web advancement path.

Preferentially, the tube forming and sealing device may be arranged such that the tube may present a vertical orientation.

In even more detail, the tube forming and sealing device may be configured to gradually fold the web into the tube, in particular by overlapping the longitudinal edges of the web with one another. Thereby, in use, a longitudinal seam portion of the tube is formed. In particular, sections of the longitudinal seam portions define the longitudinal sealing bands of respective sealed composite packages.

More specifically, the tube forming and sealing device may comprise at least two forming ring assemblies, in particular arranged within the isolation chamber, being configured to gradually fold in cooperation with one another the web into the tube, in particular by overlapping the longitudinal edges of the web with one another.

Additionally, the tube forming and sealing device may comprise a sealing head, in particular arranged within the isolation chamber, and configured to longitudinally seal the tube, in particular along the longitudinal seam portion.

Moreover, the tube forming and sealing device may also comprise a pressuring assembly configured to exert a mechanical force on the longitudinal seam portion.

The package forming apparatus may comprise:
- a plurality of forming and sealing assemblies, each one configured to at least form (shape) the tube, to transversally seal the tube, and in particular to also transversally cut the tube; and
- a conveying unit configured to advance the forming and sealing assemblies.

More specifically, each forming and sealing assembly may comprise:
- a forming shell configured to at least partially define the shape of the composite packages; and
- a sealing unit configured to at least transversally compress, in particular flat-lay and squeeze, and to transversally seal the tube, in particular during advancement of the tube and between two respective composite packages.

In particular, the transversal sealing device may comprise the sealing units of the forming and sealing assemblies. Preferentially, the control unit 100 may be configured to control operation (e.g., power, force etc.) of the sealing units in dependence of the determined quality of the transversal sealing bands 2.

Moreover, each forming and sealing assembly may comprise a cutting device for transversally cutting the tube.

Preferentially, each sealing apparatus may be configured to form a main sealing band, and in particular the respective cutting device may be configured to transversally cut through the main sealing band. Even more preferentially, each main sealing band forms - once cut - the respective transversal sealing band 2 of a leading composite package and the respective transversal sealing band 2 of a successive (trailing) composite package, in particular the latter still being part of the tube.

In further detail, each forming shell may comprise at least a first half-shell and a second half-shell configured to at least partially define in cooperation the shape of the respective composite package. In particular, the first half-shell and the second half-shell may be configured to contact the tube from opposite sides thereof.

Moreover, each sealing unit may comprise a respective first portion (e.g., a sonotrode), in particular associated to the first half-shell, and a respective second portion (e.g., an anvil), in particular associated to the second half-shell. Each first portion and the respective second portion may be configured to cooperate together, in particular to transversally compress and to transversally seal the tube.

In particular, the control unit 100 may be configured to control operation of each first portion, e.g., of the sonotrode, in dependence of the determined quality of the sealing bands 2.

In use, the packaging plant produces sealed composite packages filled with the pourable product, in particular the pourable food product.

The advantages of the present solution will be clear from the foregoing description.

In particular, the automated defect detection system 1 allows to evaluate the quality of sealings of composite packages, in particular transversal sealing bands, with a high accuracy and repeatability of the results, in particular independently of the experience of the operators and/or of different testing conditions.

Clearly, changes may be made to the solution described herein without, however, departing from the scope of protection as defined in the accompanying claims.

In particular, it is again underlined that the present solution can be applied for sealing inspections, independently of the type of sealings (longitudinal or transversal), of the method of obtaining the same sealings (e.g., via hot air, induction heating, ultrasound heating) and independently of the testing conditions (e.g., both in case of tearing tests and in case of plastic bag analysis).

Moreover, according to a possible embodiment, the automated defect detection system 1 may also include a reading (or scanning) apparatus configured to read (or scan) an identification code (or identification mark) which is present on the sample and corresponding sealing band 2. The identification code may be a QR code, or a bar code, or a number, or any other type of code. The reading apparatus may be implemented by the above discussed vision system 10 (in this case, a camera of the vision system 10 also reads the identification code) or may include a dedicated camera.

In particular, the analysis unit 12 may be configured to associate the images of the sealing band 2 captured by the vision system 10 to this identification code. This allows to correlate information associated to the sample (e.g., regarding the production process of the sample) with the images captured by the vision system 10, to improve traceability of the samples and the quality analysis.

## Claims

1. A system (1) for automated defect detection in sealing bands (2) of composite packages formed by a packaging machine, each sealing band (2) being formed from a first band portion (3), a second band portion (4) and a layer of heat seal material (5) interposed between the first band portion (3) and the second band portion (4); the system (1) comprising:
- a vision system (10) configured to capture images of the sealing band (2) during a sealing testing procedure;
- an analysis unit (12) operatively connected to the vision system (10) and configured to analyze one or more images acquired by the vision system (10) to determine the quality of the sealing band (2) as a function of the one or more images,
wherein the analysis unit (12) comprises an artificial intelligence module (24) configured to analyze the one or more images by means of a machine-learning model, to detect defects in the sealing band (2); the machine learning model having been trained with a training data set, including image data associated with quality measurement,
the system (1) being **characterized in that** it comprises:
- an automated testing apparatus (30) configured to cause a delamination of the sealing band (2); wherein the vision system (10) is configured to capture the one or more images of the sealing band (2) during its delamination by the automated testing apparatus (30);
- at least one sensor generating sensor data indicative of said sealing testing procedure and/or of operation of the packaging machine in the formation of the sealing band (2), wherein the analysis unit (12) is configured to receive, as input data, both image data provided by the vision system (10) and the sensor data; and the artificial intelligence module (24) is configured to process with the machine-learning model both image data and sensor data, with a multi-modal approach, in order to assess the presence or absence of defects in the sealing band (2).

2. The system according to claim 1, the artificial intelligence module (24) is configured to process with the machine-learning model both image data and sensor data, with a multi-modal approach, in order to assess the presence or absence of defects in the sealing band (2) and a type of said defects.

3. The system according to claim 1 or claim 2, wherein the machine learning model is trained based on the training data set, including both sensor data and image data associated with a quality measurement.

4. The system according to any of the preceding claims, wherein the analysis unit (12) further comprises a deviation monitoring module (26), configured to evaluate a deviation of a performance of the machine learning model over time; and to determine a requirement of re-training of the machine learning model in case the deviation exceeds a given threshold.

5. The system according to claim 4, wherein the deviation monitoring module (26) is further configured to monitor deviations of the output results from the artificial intelligence module (24); and/or deviations of characteristics of the input data, as compared to a previous batch of input data and/or to the training data set.

6. The system according to any one of the preceding claims, wherein the automated testing apparatus (30) comprises:
- a first clamping device (32) and a second clamping device (33) configured to clamp the sealing band (2) between one another, such that the sealing band (2) is interposed between the first clamping device (32) and the second clamping device (33);
- an actuation device (35) configured to actuate a relative movement of the first clamping device (32) and the second clamping device (33) so as to cause the delamination of the sealing band (2).

7. The system according to claim 6, wherein the automated testing apparatus (30) further comprises a detection device configured to determine at least one force acting on the sealing band (2) during its delamination and/or a relative position between the first clamping device (32) and the second clamping device (33), wherein the analysis unit (12) is further configured to receive, as input data, the at least one force and/or position, the artificial intelligence module (24) being configured to process with the machine-learning model both image data and the at least one of the force and/or the position.

8. The system according to any of the preceding claims, wherein the imaging device (11) is provided with at least one polarization filter (15), wherein at least one image of the sealing band (2) is captured through the polarization filter (15).

9. The system according to any of the preceding claims, wherein the analysis unit (12) further comprises an output module (28), which is configured to output results related to sealing defects: to a human operator, via a user interface; and/or to a control unit (100) of the packaging machine, to provide feedback data for control of the operation of the packaging machine, as a function of the determined quality of the inspected sealing band (2).

10. A packaging plant for packaging a pourable product into sealed composite packages, the packaging plant comprising:
- a packaging machine for forming a plurality of sealed composite packages having one or more sealing bands (2) and being filled with the pourable product;
- a sampling unit for sampling one or more sealed composite packages from the plurality of sealed composite packages; and
- the system (1) for automated defect detection according to any one of the preceding claims, for determining the quality of one or more sealing bands (2) of one or more sampled sealed composite packages.

11. The packaging plant according to claim 10, wherein the packaging apparatus comprises:
- a transversal sealing device for generating transversal sealing bands of the sealed composite packages; and
- a control unit (100) operatively coupled to the transversal sealing device and configured to control operation of the transversal sealing device as a function of the quality of the one or more sealing bands (2) of the one or more sampled sealed composite packages, determined by the system (1).

12. A method for automated defect detection in sealing bands (2) of composite packages, each sealing band (2) being formed from a first band portion (3), a second band portion (4) and a layer of heat seal material (5) interposed between the first band portion (3) and the second band portion (4); the method comprising:
- capturing images of the sealing band (2); and
- analyzing the quality of the sealing band (2) as a function of the one or more images,
wherein analyzing comprises processing the one or more images by means of a machine-learning model so as to detect the defects in the sealing band (2), the machine learning model having been trained with a training data set, including image data with a known associated quality measurement,
wherein analyzing comprises receiving, as input data, both image data associated with said images and sensor data indicative of said sealing testing procedure and/or of operation of the packaging machine in the formation of the sealing band (2); and analyzing with the machine-learning model, in order to assess the quality of the sealing band (2), both image data and sensor data, with a multi-modal approach,
- causing delamination of the sealing band (2); and
- acquiring the one or more images during the delamination.

13. The method according to the preceding claim, further comprising detecting at least one force acting on the sealing band (2) during the delamination, and wherein analyzing comprises receiving, as input data, both image data and said at least one force.

14. A computer program product, comprising computer instructions configured to implement, when executed by one or more processors of a processing system, the method according to any one of claims 12 or 13.

## Patentansprüche

1. Ein System (1) zur automatisierten Fehlererkennung in Siegelbändern (2) von Verbundverpackungen, die von einer Verpackungsmaschine gebildet werden, wobei jedes Siegelband (2) aus einem ersten Bandabschnitt (3), einem zweiten Bandabschnitt (4) und einer zwischen dem ersten Bandabschnitt (3) und dem zweiten Bandabschnitt (4) angeordneten Schicht aus Heißsiegelmaterial (5) gebildet ist; wobei das System (1) umfasst:
- ein Bildverarbeitungssystem (10), das so konfiguriert ist, dass es während eines Versiegelungsprüfvorgangs Bilder des Versiegelungsbandes (2) aufnimmt;
- eine Analyseeinheit (12), die funktionsmäßig mit dem Bildverarbeitungssystem (10) verbunden und so konfiguriert ist, dass sie ein oder mehrere vom Bildverarbeitungssystem (10) erfasste Bilder analysiert, um die Qualität des Siegelbands (2) in Abhängigkeit von dem einen oder den mehreren Bildern zu bestimmen,
wobei die Analyseeinheit (12) ein Modul für künstliche Intelligenz (24) umfasst, das so konfiguriert ist, dass es das eine oder die mehreren Bilder mittels eines Modells für maschinelles Lernen analysiert, um Fehler im Dichtungsband (2) zu erkennen; wobei das Modell für maschinelles Lernen mit einem Trainingsdatensatz trainiert wurde, der Bilddaten umfasst, die mit einer Qualitätsmessung assoziiert sind,
wobei das System (1) **dadurch gekennzeichnet ist, dass** es umfasst:
- eine automatisierte Prüfvorrichtung (30), die so konfiguriert ist, dass sie eine Delaminierung des Dichtungsbandes (2) bewirkt; wobei das Bildverarbeitungssystem (10) so konfiguriert ist, dass es das eine oder die mehreren Bilder des Dichtungsbandes (2) während dessen Delaminierung durch die automatisierte Prüfvorrichtung (30) aufnimmt;
- mindestens einen Sensor, der Sensordaten erzeugt, die Aufschluss über den genannten Versiegelungsprüfvorgang und/oder über den Betrieb der Verpackungsmaschine bei der Bildung des Versiegelungsbandes (2) geben, wobei die Analyseeinheit (12) so ausgelegt ist, dass sie sowohl die vom Bildverarbeitungssystem (10) gelieferten Bilddaten als auch die Sensordaten als Eingabedaten empfängt; und das Modul für künstliche Intelligenz (24) so konfiguriert ist, dass es mit dem Modell für maschinelles Lernen sowohl Bilddaten als auch Sensordaten unter Verwendung eines multimodalen Ansatzes verarbeitet, um das Vorhandensein oder Fehlen von Fehlern im Siegelband (2) zu beurteilen.

2. Das System nach Anspruch 1, wobei das Modul für künstliche Intelligenz (24) so konfiguriert ist, dass es mit dem Modell für maschinelles Lernen sowohl Bilddaten als auch Sensordaten unter Verwendung eines multimodalen Ansatzes verarbeitet, um das Vorhandensein oder Fehlen von Fehlern im Dichtungsband (2) sowie die Art dieser Fehler zu bewerten.

3. Das System nach Anspruch 1 oder Anspruch 2, wobei das maschinelle Lernmodell auf der Grundlage des Trainingsdatensatzes trainiert wird, der sowohl Sensordaten als auch Bilddaten umfasst, die mit einer Qualitätsmessung assoziiert sind.

4. Das System nach einem der vorstehenden Ansprüche, wobei die Analyseeinheit (12) ferner ein Abweichungsüberwachungsmodul (26) umfasst, das so konfiguriert ist, dass es eine Abweichung der Leistung des Modells für maschinelles Lernen im Zeitverlauf bewertet und feststellt, ob ein erneutes Training des Modells für maschinelles Lernen erforderlich ist, falls die Abweichung einen vorgegebenen Schwellenwert überschreitet.

5. Das System nach Anspruch 4, wobei das Abweichungsüberwachungsmodul (26) ferner so konfiguriert ist, dass es Abweichungen der Ausgaberesultate des Moduls für künstliche Intelligenz (24) und/oder Abweichungen von Merkmalen der Eingabedaten im Vergleich zu einem vorherigen Stapel von Eingabedaten und/oder zum Trainingsdatensatz überwacht.

6. Das System nach einem der vorstehenden Ansprüche , wobei die automatisierte Testvorrichtung (30) umfasst:
- eine erste Klemmvorrichtung (32) und eine zweite Klemmvorrichtung (33), die so ausgebildet sind, dass sie das Dichtungsband (2) zwischen sich einklemmen, sodass das Dichtungsband (2) zwischen der ersten Klemmvorrichtung (32) und der zweiten Klemmvorrichtung (33) angeordnet ist;
- eine Betätigungsvorrichtung (35), die so ausgebildet ist, dass sie eine Relativbewegung der ersten Klemmvorrichtung (32) und der zweiten Klemmvorrichtung (33) bewirkt, um die Delaminierung des Dichtungsbandes (2) zu bewirken.

7. Das System nach Anspruch 6, wobei die automatisierte Prüfvorrichtung (30) ferner eine Erfassungsvorrichtung umfasst, die so konfiguriert ist, dass sie mindestens eine auf das Dichtungsband (2) während dessen Delaminierung wirkende Kraft und/oder eine relative Position zwischen der ersten Klemmvorrichtung (32) und der zweiten Klemmvorrichtung (33) zu ermitteln, wobei die Analyseeinheit (12) ferner so ausgelegt ist, dass sie als Eingabedaten die mindestens eine Kraft und/oder Position empfängt, wobei das Modul für künstliche Intelligenz (24) so ausgelegt ist, dass es mit dem maschinellen Lernmodell sowohl Bilddaten als auch die mindestens eine der Kraft und/oder der Position verarbeitet.

8. Das System nach einem der vorstehenden Ansprüche, wobei die Bildgebungsvorrichtung (11) mit mindestens einem Polarisationsfilter (15) versehen ist, wobei mindestens ein Bild des Dichtungsbandes (2) durch den Polarisationsfilter (15) aufgenommen wird.

9. Das System nach einem der vorstehenden Ansprüche, wobei die Analyseeinheit (12) ferner ein Ausgabemodul (28) umfasst, das so konfiguriert ist, dass es Ergebnisse in Bezug auf Versiegelungsfehler ausgibt: an einen menschlichen Bediener über eine Benutzerschnittstelle; und/oder an eine Steuereinheit (100) der Verpackungsmaschin , um Rückmeldedaten zur Steuerung des Betriebs der Verpackungsmaschine in Abhängigkeit von der ermittelten Qualität des geprüften Siegelbandes (2) bereitzustellen.

10. Eine Verpackungsanlage zum Verpacken eines fließfähigen Produkts in versiegelte Verbundverpackungen, wobei die Verpackungsanlage umfasst:
- eine Verpackungsmaschine zum Bilden einer Vielzahl von versiegelten Verbundverpackungen, die ein oder mehrere Siegelbänder (2) aufweisen und mit dem fließfähigen Produkt befüllt sind;
- eine Probenahmeeinheit zum Entnehmen einer oder mehrerer versiegelter Verbundverpackungen aus der Vielzahl versiegelter Verbundverpackungen; und
- das System (1) zur automatisierten Fehlererkennung gemäß einem der vorstehenden Ansprüche, zur Bestimmung der Qualität eines oder mehrerer Siegelbänder (2) einer oder mehrerer entnommener versiegelter Verbundverpackungen.

11. Verpackungsanlage nach Anspruch 10, wobei die Verpackungsvorrichtung umfasst:
- eine Quersiegelvorrichtung zum Erzeugen von Quersiegelbändern der versiegelten Verbundverpackungen; und
- eine Steuereinheit (100), die funktionsmäßig mit der Quersiegelvorrichtung gekoppelt und so konfiguriert ist, dass sie den Betrieb der Quersiegelvorrichtung in Abhängigkeit von der Qualität des einen oder der mehreren Siegelbänder (2) der einen oder mehreren entnommenen versiegelten Verbundverpackungen steuert, die durch das System (1) bestimmt wird.

12. Verfahren zur automatisierten Fehlererkennung in Siegelbändern (2) von Verbundverpackungen, wobei jedes Siegelband (2) aus einem ersten Bandabschnitt (3), einem zweiten Bandabschnitt (4) und einer zwischen dem ersten Bandabschnitt (3) und dem zweiten Bandabschnitt (4) angeordneten Schicht aus Heißsiegelmaterial (5) gebildet ist; wobei das Verfahren umfasst:
- Aufnehmen von Bildern des Siegelbands (2); und
- Analysieren der Qualität des Dichtungsbandes (2) anhand des einen oder der mehreren Bilder,
wobei die Analyse die Verarbeitung des einen oder der mehreren Bilder mittels eines Modells für maschinelles Lernen umfasst, um die Defekte im Siegelband (2) zu erkennen, wobei das Modell für maschinelles Lernen mit einem Trainingsdatensatz trainiert wurde, der Bilddaten mit einer bekannten zugehörigen Qualitätsmessung enthält,
wobei die Analyse umfasst, als Eingabedaten sowohl die den Bildern zugeordneten Bilddaten als auch Sensordaten zu empfangen, die auf das Versiegelungsprüfverfahren und/oder den Betrieb der Verpackungsmaschine bei der Bildung des Versiegelungsbandes (2) hinweisen; und mit dem Modell des maschinellen Lernens sowohl die Bilddaten als auch die Sensordaten mit einem multimodalen Ansatz zu analysieren, um die Qualität des Versiegelungsbandes (2) zu bewerten,
- Verursachen einer Delaminierung des Siegelbandes (2); und
- Erfassen des einen oder der mehreren Bilder während der Delaminierung.

13. Verfahren nach dem vorstehenden Anspruch, das ferner das Erfassen mindestens einer während der Delaminierung auf das Siegelband (2) einwirkenden Kraft umfasst, wobei das Analysieren das Empfangen sowohl von Bilddaten als auch der mindestens einen Kraft als Eingabedaten umfasst.

14. Ein Computerprogrammprodukt, das Computerbefehle umfasst, die so konfiguriert sind, dass sie bei Ausführung durch einen oder mehrere Prozessoren eines Verarbeitungssystems das Verfahren gemäß einem der Ansprüche 12 oder 13 implementieren.

## Revendications

1. Système (1) de détection automatisée de défauts dans des bandes de scellage (2) d'emballages composites formés par une machine d'emballage, chaque bande de scellage (2) étant formée d'une première partie de bande (3), d'une deuxième partie de bande (4) et d'une couche de matériau thermoscellable (5) intercalée entre la première partie de bande (3) et la deuxième partie de bande (4) ; le système (1) comprenant :
- un système de vision (10) configuré pour capturer des images de la bande de scellage (2) au cours d'une procédure de test de scellage ;
- une unité d'analyse (12) connectée de manière opérationnelle au système de vision (10) et configurée pour analyser une ou plusieurs images acquises par le système de vision (10) afin de déterminer la qualité de la bande de scellage (2) en fonction de la ou des images,
dans lequel l'unité d'analyse (12) comprend un module d'intelligence artificielle (24) configuré pour analyser la ou les images au moyen d'un modèle d'apprentissage automatique, afin de détecter des défauts dans la bande d'étanchéité (2) ; le modèle d'apprentissage automatique ayant été entraîné à l'aide d'un ensemble de données d'entraînement, comprenant des données d'image associées à une mesure de qualité,
le système (1) étant **caractérisé en ce qu'**il comprend:
- un appareil de test automatisé (30) configuré pour provoquer une délamination de la bande d'étanchéité (2) ; dans lequel le système de vision (10) est configuré pour capturer la ou les images de la bande d'étanchéité (2) pendant sa délamination par l'appareil de test automatisé (30) ;
- au moins un capteur générant des données de capteur indicatives de ladite procédure de contrôle de soudure et/ou du fonctionnement de la machine d'emballage lors de la formation d' e la bande de soudure (2), l'unité d'analyse (12) étant configurée pour recevoir, en tant que données d'entrée, à la fois les données d'image fournies par le système de vision (10) et les données de capteur ; et le module d'intelligence artificielle (24) est configuré pour traiter, à l'aide du modèle d'apprentissage automatique, à la fois les données d'image et les données de capteur, selon une approche multimodale, afin d'évaluer la présence ou l'absence de défauts dans la bande de scellage (2).

2. Système selon la revendication 1, dans lequel le module d'intelligence artificielle (24) est configuré pour traiter, à l'aide du modèle d'apprentissage automatique, à la fois les données d'image et les données de capteur, selon une approche multimodale, afin d'évaluer la présence ou l'absence de défauts dans la bande de scellage (2) ainsi que le type desdits défauts.

3. Système selon la revendication 1 ou la revendication 2, dans lequel le modèle d'apprentissage automatique est entraîné sur la base d'un ensemble de données d'entraînement, comprenant à la fois des données de capteurs et des données d'images associées à une mesure de qualité.

4. Système selon l'une quelconque des revendications précédentes, dans lequel l'unité d'analyse (12) comprend en outre un module de surveillance des écarts (26), configuré pour évaluer un écart de performance du modèle d'apprentissage automatique au fil du temps ; et pour déterminer la nécessité de réentraîner le modèle d'apprentissage automatique au cas où l'écart dépasserait un seuil donné.

5. Système selon la revendication 4, dans lequel le module de surveillance des écarts (26) est en outre configuré pour surveiller les écarts des résultats de sortie du module d'intelligence artificielle (24) ; et/ou les écarts des caractéristiques des données d'entrée, par rapport à un lot précédent de données d'entrée et/ou à l'ensemble de données d'apprentissage.

6. Système selon l'une quelconque des revendications d' s précédentes, dans lequel l'appareil de test automatisé (30) comprend :
- un premier dispositif de serrage (32) et un deuxième dispositif de serrage (33) conçus pour serrer la bande d'étanchéité (2) l'un contre l'autre, de telle sorte que la bande d'étanchéité (2) soit intercalée entre le premier dispositif de serrage (32) et le deuxième dispositif de serrage (33) ;
- un dispositif d'actionnement (35) configuré pour actionner un mouvement relatif du premier dispositif de serrage (32) et du deuxième dispositif de serrage (33) de manière à provoquer la délamination de la bande d'étanchéité (2).

7. Système selon la revendication 6, dans lequel l'appareil de test automatisé (30) comprend en outre un dispositif de détection configuré pour déterminer au moins une force agissant sur la bande d'étanchéité (2) pendant son délaminage et/ou une position relative entre le premier dispositif de serrage (32) et le deuxième dispositif de serrage (33), dans lequel l'unité d'analyse (12) est en outre configurée pour recevoir, en tant que données d'entrée, ladite au moins une force et/ou position, le module d'intelligence artificielle (24) étant configuré pour traiter, à l'aide du modèle d'apprentissage automatique, à la fois les données d'image et ladite au moins une force et/ou position.

8. Système selon l'une quelconque des revendications précédentes, dans lequel le dispositif d'imagerie (11) est muni d'au moins un filtre de polarisation (15), dans lequel au moins une image de la bande de scellage (2) est capturée à travers le filtre de polarisation (15).

9. Système selon l'une quelconque des revendications précédentes, dans lequel l'unité d'analyse (12) comprend en outre un module de sortie (28) configuré pour transmettre les résultats relatifs aux défauts de scellage : à un opérateur humain, via une interface utilisateur ; et/ou à une unité de commande (100) d' e la machine d'emballage, afin de fournir des données de rétroaction pour la commande du fonctionnement de la machine d'emballage, en fonction de la qualité déterminée de la bande de scellage inspectée (2).

10. Installation d'emballage destinée à emballer un produit versable dans des emballages composites scellés, l'installation d'emballage comprenant :
- une machine d'emballage destinée à former une pluralité d'emballages composites scellés comportant une ou plusieurs bandes de scellage (2) et remplis du produit versable ;
- une unité d'échantillonnage destinée à prélever un ou plusieurs emballages composites scellés parmi la pluralité d'emballages composites scellés ; et
- le système (1) de détection automatisée des défauts selon l'une quelconque des revendications précédentes, destiné à déterminer la qualité d'une ou plusieurs bandes de scellage (2) d'un ou plusieurs emballages composites scellés échantillonnés.

11. Installation de conditionnement selon la revendication 10, dans laquelle l'appareil de conditionnement comprend :
- un dispositif de scellage transversal destiné à générer des bandes de scellage transversales des emballages composites scellés ; et
- une unité de commande (100) couplée de manière opérationnelle au dispositif de scellage transversal et configurée pour commander le fonctionnement du dispositif de scellage transversal en fonction de la qualité de la ou des bandes de scellage (2) du ou des emballages composites scellés échantillonnés, déterminée par le système (1).

12. Procédé de détection automatisée de défauts dans les bandes de scellage (2) d'emballages composites, chaque bande de scellage (2) étant formée d'une première partie de bande (3), d'une deuxième partie de bande (4) et d'une couche de matériau thermoscellable (5) intercalée entre la première partie de bande (3) et la deuxième partie de bande (4) de l' ; le procédé comprenant :
- la capture d'images de la bande de scellage (2) ; et
- analyser la qualité de la bande d'étanchéité (2) en fonction d'une ou plusieurs images,
dans lequel l'analyse comprend le traitement de la ou des images au moyen d'un modèle d'apprentissage automatique de manière à détecter les défauts dans la bande de scellage (2), le modèle d'apprentissage automatique ayant été entraîné à l'aide d'un ensemble de données d'entraînement, comprenant des données d'image associées à une mesure de qualité connue,
dans lequel l'analyse comprend la réception, en tant que données d'entrée, à la fois de données d'image associées auxdites images et de données de capteur indicatives de ladite procédure de test de scellage et/ou du fonctionnement de la machine d'emballage lors de la formation de la bande de scellage (2) ; et l'analyse, à l'aide du modèle d'apprentissage automatique, afin d'évaluer la qualité de la bande de scellage (2), à la fois des données d'image et des données de capteur, selon une approche multimodale,
- provoquer le délaminage de la bande de scellage (2) ; et
- l'acquisition d'une ou plusieurs images pendant le délaminage.

13. Procédé selon la revendication précédente, comprenant en outre la détection d'au moins une force agissant sur la bande de scellage (2) pendant le délaminage, et dans lequel l'analyse comprend la réception, en tant que données d'entrée, à la fois des données d'image et de ladite au moins une force.

14. Produit logiciel, comprenant des instructions informatiques configurées pour mettre en œuvre, lorsqu'elles sont exécutées par un ou plusieurs processeurs d'un système de traitement, le procédé selon l'une quelconque des revendications 12 ou 13.
